# EUROPÄISCHE PATENTANMELDUNG

(11) **EP 1 069 305 A2**
(43) Veröffentlichungstag der Anmeldung: **17.01.2001**
(21) Anmeldenummer: 00113106.9
(22) Anmeldetag: 28.06.2000
(51) Int. Cl.: F02M 31/06

(54) **Vorrichtung zur Regelung der Ansauglufttemperatur vor dem Luftfilter einer Brennkraftmaschine**

(30) Priorität: 14.07.1999 DE 19932805
(71) Anmelder: Volkswagen Aktiengesellschaft, 38436 Wolfsburg (DE)
(72) Erfinder: Birkle, Ernst-Herbert, Dr., 38108 Braunschweig (DE)

(57) **Zusammenfassung**

Die Erfindung betrifft eine Vorrichtung zum Regeln der Ansauglufttemperatur vor dem Luftfilter einer Brennkraftmaschine. Teil der Vorrichtung ist eine Anordnung zum Steuern der Temperatur der angesaugten Luft, wobei vor dem Filterelement (3) ein Temperatursensor (4) angeordnet ist. Zum Vermeiden von Schneeablagerungen im Luftfiltergehäuse (2) ist der Temperatursensor (4) auf der Rohluftseite des Luftfilters, im Einströmbereich der Verbrennungsluft in das Luftfiltergehäuse (2), an einer strömungsbedingt von Schneeablagerungen gefährdeten Stelle (6) angeordnet.

## Beschreibung

Die Erfindung betrifft eine Luftfilteranordnung für eine Brennkraftmaschine mit einem Sensor und einer Vorrichtung zur Regelung der Ansauglufttemperatur nach dem Oberbegriff des Patentanspruches 1.

Vorbekannt ist aus der Schrift DE 36 05 412 A1 eine gattungsgemäße Einrichtung zum Regeln der Ansauglufttemperatur im Ansaugtrakt einer Brennkraftmaschine. Ein Warmluft - und ein Kaltluftkanal werden zu einem Mischluftkanal zusammengeführt. Im Bereich der Zusammenführung befindet sich eine schwenkbare Luftklappe. Diese ist so angeordnet, daß sie in einer Stellung zwischen ihren Anschlägen alternativ größere oder kleinere Querschnitte der Kanäle für die durchströmende Luft einstellt, jedoch bei völligem öffnen des einen Kanals den anderen verschließt. Die Luftklappe wird über eine Schubstange von einem Wachsthermostaten aus temperaturabhängig betätigt. Die Temperatur der vom Motor angesaugte Luft wird durch das von der Luftklappe eingestellte Verhältnis von Warmer zu kalter Luft geregelt. Der Wachsthermostat beeinflußt bedingt durch seine Lage im Ansaugkanal die Strömung der angesaugte Luft nachteilig, wodurch Strömungsverluste im Ansaugkanal entstehen. Der Thermostat ist in Strömungsrichtung der Luft gesehen am Beginn des Mischluftkanals angeordnet. Die separat einströmende Menge kalter und warmer Luft sind in diesem Bereich des Mischluftkanals noch nicht gut durchmischt. Die konstruktive Gestaltung der Luftklappe bedingt außerdem eine Strömungsführung der Kaltluft an der dem Thermostaten gegenüberliegenden Wandung des Mischluftkanals. Mit der Kaltluft angesaugter Schnee kann sich somit in einem Bereich nach dem Thermostate ablagern.

Eine Vorrichtung zur Regelung der Ansauglufttemperatur mit einem innerhalb eines Luftfilters angeordneten Temperatursensor zum Messen der Ansauglufttemperatur ist aus der Schrift DE 30 02 856 C2 vorbekannt. In einem vor dem Luftfilter angeordneten Lufteinlaßkanal für Außenluft mündet radial ein angewärmte Luft führender Kanal. Eine Regeleinrichtung mit pneumatischem Steller stellt, in Abhängigkeit von dem im Ansaugrohr der Brennkraftmaschine bestehenden Unterdruck und der Temperatur der auf der Reinluftseite des Filters angesaugten Luft, eine Luftklappe, welche beide Kanäle in einem festen Verhältnis gegenläufig öffnet bzw. schließt. Nachteilig ist, daß die Temperatur der Ansaugluft in Abhängigkeit von der erreichten Lufttemperatur in der Reinluftzone des Luftfilters geregelt wird.

Beide Vorrichtungen zum Regeln der Ansauglufttemperatur sind so ausgelegt, daß bei niedrigen Temperaturen und vorzugsweise Vollast auftretende Vereisung im Ansaugsystem durch eine Mindestöffnung des Warmluftkanals und eine damit gesicherte Mindesttemperatur vermieden wird.

Die im Stand der Technik beschriebenen Lösungen sind nicht in der Lage, Schneeablagerungen im Luftfilter sicher zu verhindern.

Der Erfindung liegt die Aufgabe zugrunde, eine Vorrichtung zur Regelung der Ansauglufttemperatur mit einem vor dem Filterelement angeordneten Temperatursensor zu schaffen, bei der ohne zusätzliche Mittel Schneeablagerungen im Luftfiltergehäuse erkannt und verhindert werden.

Diese Aufgabe wird bei gattungsgemäßen Vorrichtungen erfindungsgemäß durch die kennzeichnenden Merkmale des Patentanspruchs 1 gelöst.

Erfindungsgemäß ist der Sensor zum Messen der Lufttemperatur im Luftfiltergehäuse auf der Rohluftseite vor dem Filterelement in einem Bereich, in dem bevorzugt Schneeablagerung auftreten, angeordnet. Schon beim Beginn einer Schneeablagerung im Luftfiltergehäuse wird der Temperatursensor von dem sich um ihn ablagernden Schnee direkt gekühlt. Die vom Sensor beeinflußte Temperaturregelung für die Ansauglufttemperatur führt solange Warmluft zu, bis der um den Sensor herum abgelagerte Schnee geschmolzen ist und der Sensor durch die ihn umströmende Luft auf deren Temperatur erwärmt wurde.

In einer vorteilhaften Ausgestaltung der Erfindung wird das Signal des Temperatursensors direkt einer Stelleinheit für die Regelklappe, zum Steuern des Verhältnisses von warmer zu kalter Luft, im Ansaugkanal zugeführt. Sensor und Stelleinheit können in einer Baueinheit, z.B. einem Thermostat, enthalten sein.

In einer weiteren Ausführung der Erfindung wird das Signal des Temperatursensors einer Recheneinheit zugeführt, welche ein Ansteuersignal für die Stelleinheit generiert. In dieser Recheneinheit ist ein Algorithmus zur Regelung der Temperatur abgelegt, der von weiteren Umweltparametern oder von Betriebsparametern der Brennkraftmaschine abhängig sein kann.

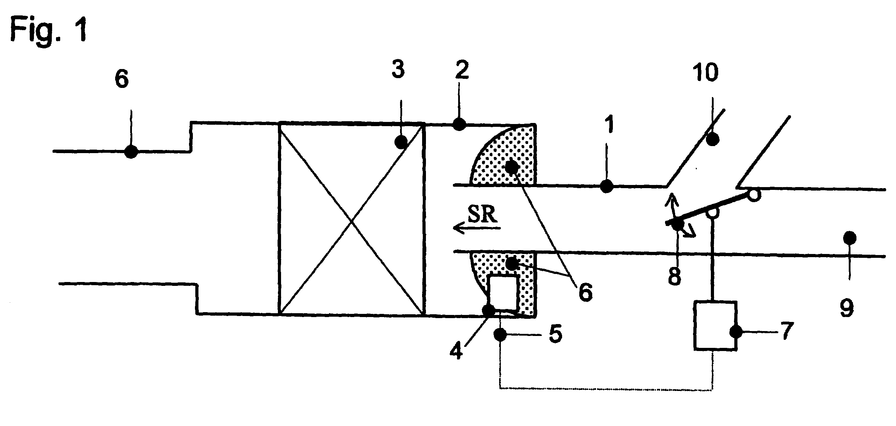

Weitere Einzelheiten der Erfindung werden nachfolgend anhand von schematisch dargestellten Ausführungsbeispielen in der Zeichnung beschrieben.

Hierbei zeigt die Figur einen Einlaßkanal 1 zum Ansaugen von Verbrennungsluft für eine Brennkraftmaschine - nicht dargestellt - , in der ein warme Luft führender Kanal 10, der z. B. Luft aus dem Bereich des Abgaskrümmers der Brennkraftmaschine - nicht dargestellt - ansaugt, und ein Außenluft führender Kanal 9 münden. An der Einmündungsstelle der beiden Kanäle 9, 10 in den Ansaugkanal 1 ist eine über eine Schubstange 11 von einer Stelleinheit 7 schwenkbare Regelklappe, zum bedarfsgerechten Einstellen des Öffnungsverhältnisses von Warm- und Kaltluftkanal zueinander, angeordnet Der Einlaßkanal 1 mündet in Strömungsrichtung SR in das Luftfiltergehäuse 2, in dem ein von Verbrennungsluft durchströmtes Filterelement 3 angeordnet ist. Das Filterelement 3 und das es umgebende Luftfiltergehäuse 2 bilden zusammen den Luftfilter - nicht gesondert bezeichnet -. Der Ansaugkanal 1 endet im Luftfiltergehäuse 2. Er weist einen in das Luftfiltergehäuse 2 hineinragenden Abschnitt auf, um den herum sich innerhalb des Luftfiltergehäuses 2, hervorgerufen durch die einströmende Ansaugluft, eine Zone 6 bevorzugter Ablagerung von in der Ansaugluft mitgeführten festen Bestandteilen, z. B. Schnee, ausbildet. Innerhalb dieser Zone 6 ist ein Temperatursensor 4 zum Messen der Ansauglufttemperatur angeordnet. Das vom Temperatursensor 4 erzeugte temperaturäquivalente Signal liegt einer Stelleinheit 7 an, welche die Temperatur der dem Motor - nicht dargestellt - zugeführten Verbrennungsluft steuert. Das von der Leitung 5 übertragene temperaturäquivalente Signal steuert die Stelleinheit 7 an, die über die Schubstange 11 die Stellung der Regelklappe 8 vorgibt und somit die Temperatur der in den Filter geleiteten Luft steuert. Das in der Leitung 5 übertragene Signal kann ein elektrisches, hydraulisches oder ein pneumatisches Signal sein. Es kann in einer anderen Ausführung der Erfindung auch einer Recheneinheit, z.B. einem Motorsteuergerät, zugeführt werden, die aus dem Meßsignal eine Stellgröße für die Stelleinheit generiert. In Strömungsrichtung SR der Verbrennungsluft schließt sich auf der Reinluftseite des Filters ein Kanal 6 an, über den die gereinigte Verbrennungsluft zum Motor - nicht dargestellt - gelangt.

## Patentansprüche

1. Vorrichtung zum Regeln der Ansauglufttemperatur vor dem Luftfilter einer Brennkraftmaschine mit einer Anordnung zum Steuern der Temperatur der angesaugten Luft, wobei vor dem Filterelement (3) ein Temperatursensor (4) angeordnet ist **dadurch gekennzeichnet,** daß der Temperatursensor (4) im Einströmbereich eines Luftfiltergehäuses (2) auf dessen Rohluftseite an einer strömungsbedingt von Schneeablagerungen gefährdeten Stelle (6) angeordnet ist.

2. Vorrichtung nach Anspruch 1 **dadurch gekennzeichnet,** daß eine die Temperatur der Ansaugluft steuernde Stelleinheit (7) vom Signal des Temperatursensors (4) direkt beeinflußt wird.

3. Vorrichtung nach Anspruch 2 **dadurch gekennzeichnet,** daß der Temperatursensor (4) und die Stelleinheit (7) zum Steuern der Temperatur der Ansaugluft eine Einheit bilden.

4. Vorrichtung nach Anspruch 1 **dadurch gekennzeichnet,** daß das Signal des Temperatursensors (4) einer Recheneinheit anliegt die eine Stellgröße für die Stelleinheit (7) der Regelkappe (8) generiert.
